# EUROPÄISCHE PATENTANMELDUNG

(11) **EP 2 944 612 A1**
(43) Veröffentlichungstag der Anmeldung: **18.11.2015**
(21) Anmeldenummer: 15167703.6
(22) Anmeldetag: 13.05.2015
(51) Int. Cl.: C02F 1/00, C02F 3/12

(54) **VORRICHTUNG ZUR AUFBEREITUNG VON ABWASSER**

(30) Priorität: 14.05.2014 DE 102014106810
(71) Anmelder: aquadetox international GmbH, 88317 Altmannshofen (DE)
(72) Erfinder: Schaible, Jürgen, 88299 Leutkirch im Allgäu (DE); Lorch, Roland, 88348 Bad Saulgau (DE)
(74) Vertreter: Pfister, Stefan Helmut Ulrich

(57) **Zusammenfassung**

Die Erfindung betrifft eine Vorrichtung zur Aufbereitung von Abwasser, insbesondere mineralöl-, fett-, eiweiß-, schwermetall-, salz- und/oder reinigungsmittelhaltigem Abwasser, umfassend oder aufweisend, wenigstens einen Schlammfang und wenigstens eine Belebungseinheit zum biologischen Umbau von im Abwasser gelösten Stoffen, insbesondere Mineralöl, Fett, Eiweiß, Schwermetalle, Salze und/oder Reinigungsmittel oder Rückständen der vorgenannten, wobei wenigstens eine räumlich von der Belebungseinheit getrennte Filtereinheit für das die Umbauprodukte enthaltende Abwasser vorgesehen ist.

## Beschreibung

Die Erfindung betrifft eine Vorrichtung zur Aufbereitung von Abwasser, insbesondere mineralöl-, fett-, eiweiß-, schwermetall-, salz- und/oder reinigungsmittelhaltigem Abwasser, eine in der Vorrichtung verwendbare Nachkläreinheit sowie die Verwendung einer Nachkläreinheit in einer derartigen Vorrichtung.

Schmutzwasser, das bei Reinigungsvorgängen beispielsweise in Autowaschanlagen, Wäschereien, Großküchen oder sonstigen mit der Reinigung im Allgemeinen oder Speziellen befassten Betrieben anfällt, kann erst dann als Brauchwasser weiterverwendet werden, wenn es einer Klärung und Reinigung unterzogen wurde. Es ist bekannt, anfallendes Schmutzwasser in einer Klärstufe zu klären und anschließend in die Kanalisation einzuleiten oder als Brauchwasser, beispielsweise als Beimischung in Autowaschanlagen, Toilettenspülung oder sonstigen, nicht zwingend auf Frischwasserverwendung angewiesenen Einsatzbereichen, wiederzuverwenden.

In herkömmlichen Kläranlagen werden in einer Klärstufe schwebende und/oder biologisch abbaubare Schmutzwasserbestandteile aus dem Schmutzwasser herausgeklärt. Das Schmutzwasser durchläuft hierbei eine Vielzahl von Stufen, die eine sukzessive Klärung bzw. ein absetzen von Schwebteilen erlauben, bevor das derart behandelte Schmutzwasser letztlich der endgültigen Verwendung zugeführt bzw. in die Kanalisation eingeleitet wird.

Insbesondere ölbelastetes Schmutzwasser wird zusätzlich einer biologischen Klärung unterzogen, bei der ölabbauende bzw. verarbeitende Mikroorganismen die Ölbestandteile des Abwassers in abscheidbare Biomasse umbauen. Hierzu wird das mit Öl belastete Abwasser in einen Reaktor überführt, in dem die Mikroorganismen unter optimalen Bedingungen, unter Umständen auch unter Einleitung von Sauerstoff, die Ölanteile metabolisieren und als verwertbare bzw. abscheidbare Biomasse ausscheiden.

Bekannt sind auch Vorrichtungen, in denen in einem biologischen Klärverfahren unter Zuhilfenahme von Mikroorganismen fett-, eiweiß-, schwermetall- und/oder reinigungsmittelhaltige Abwässer die unerwünschten Bestandteile entzogen und in verwertbare, beispielsweise kompostierbare Biomasse umgebaut werden.

Nachteilig an bekannten Vorrichtungen bzw. Kläranlagen ist, dass die im Abwasser gelösten unerwünschten Stoffe nach dem Umbau durch Mikroorganismen nur unzureichend oder sehr aufwendig aus dem Abwasser entfernt werden können und mit dem abgeleiteten Abwasser in die Kanalisation bzw. den Wasserkreislauf gelangen. Die gelösten bzw. nicht entzogenen Stoffe reichern sich dort an und können sich unter Umweltschutzgesichtspunkten als problematisch erweisen.

Aufgabe der vorliegenden Erfindung ist es daher, eine Möglichkeit zu schaffen, die Nachklärung bzw. Aufreinigung von Schmutzwasser wesentlich zu verbessern.

Diese Aufgabe wird gelöst durch eine Vorrichtung zur Aufbereitung von Abwasser, insbesondere mineralöl-, fett-, eiweiß-, schwermetall-, salz- und/oder reinigungsmittelhaltigem Abwasser, aufweisend, wenigstens eine Belebungseinheit zum biologischen Umbau von im Abwasser gelösten Stoffen, insbesondere Mineralöl, Fett, Eiweiß, Schwermetalle, Salze und/oder Reinigungsmittel oder Rückständen der vorgenannten, wobei wenigstens eine von der Belebungseinheit getrennte Nachkläreinheit für das die Umbauprodukte enthaltende Abwasser vorgesehen ist, und die Nachkläreinheit als ganz oder teilweise mit einem Granulat gefüllter Filter oder Filterkörper ausgebildet ist.

Des Weiteren wird die erfindungsgemäße Aufgabe gelöst durch eine Nachkläreinheit, insbesondere in einer Vorrichtung gemäß einem der vorhergehenden Ansprüche vorgesehene Nachkläreinheit, die einen ganz oder teilweise mit einem Granulat gefüllten Filterkörper aufweist.

Außerdem wird die erfindungsgemäße Aufgabe gelöst durch die Verwendung einer Nachkläreinheit, bestehend aus einem ganz oder teilweise mit einem Granulat gefüllten Filter oder Filterkörper in einer Vorrichtung zur Aufbereitung von Abwasser, wobei die Nachkläreinheit in Fließrichtung des Abwassers der Belebungseinheit nachgeschaltet ist.

Der Pfiff der Erfindung liegt darin, dass hier erkannt wurde, dass insbesondere für die Aufbereitung von öl- bzw. mineralölhaltigen Abwässern die Kombination der Belebungseinheit mit der nachgeschalteten Nachkläreinheit zu überraschend guten Ergebnissen, was die Qualität des nachgeklärten Abwassers angeht, führt. Dabei ist zu beachten, dass man einen mit Granulat ausgestatteten Filter im Stand der Technik hinlänglich kennt, sein Einsatz zur Aufbereitung von mineralölhaltigen Abwasser aber führt zu einem desaströsen Ergebnis, weil die Öl-Bestandteile des Abwassers das granulare Material benetzen und in kürzester Zeit unbrauchbar machen. Die der Nachkläreinheit vorgeschaltete Belebungseinheit allerdings baut bereits diese schädlichen Bestandteile des Abwassers ab und macht dann den Einsatz der granulatgefüllten Nachkläreinheit zu einem unerwarteten Erfolg.

Die ebenfalls erfindungsgemäß vorgeschlagene Nachkläreinheit, wie auch die Verwendung einer solchen Nachkläreinheit, werden von dem gleichen erfindungsgemäßen Gedanken getragen.

Als Nachkläreinheit (im Rahmen dieser Anmeldung bzw. im Prioritätsdokument auch als "Filtereinheit" bezeichnet, was dem Begriff "Nachkläreinheit" insofern entspricht) wird dabei ausdrücklich eine Anordnung verstanden, die die im Abwasser befindlichen Schwebstoffe, die zu einer Trübung des Wassers führen, aus dem Wasser entfernt, dieses also geklärt. Da die Nachkläreinheit in solchen Vorrichtungen als der letzte Schritt vor einer Verwendung des Wassers als Brauchwasser oder ähnlichem steht, unterscheidet sie sich erheblich von an solchen Vorrichtungen manchmal eingangs angeordneten, üblichen Filtern!

Die im Abwasser vorhandenen unerwünschten Stoffe werden in diesen vorgeschalteten Stufen dem Wasser mechanisch und/oder biologisch entzogen und entsprechend zurückgehalten. Nach dem biologischen Umbau der Abwasserbestandteile sind diese als gelöste oder feststoffartige Umbauprodukte bzw. Schwebestoffe oder Partikel in dem ansatzweise aufgereinigten Abwasser vorhanden. Um eine weitergehende Klärung und Reinigung des Abwassers zu erreichen, zeichnet sich die vorgeschlagene Vorrichtung nunmehr dadurch aus, dass wenigstens eine von der Belebungseinheit bzw. -stufe getrennte Nachkläreinheit für das die Umbauprodukte enthaltende Abwasser vorgesehen ist. In dieser Nachkläreinheit werden kleine und kleinste Partikel sowie gelöste Stoffe aus dem vorbehandelten Abwasser entzogen und in der Nachkläreinheit zurückgehalten. Das über eine Austragvorrichtung entnehmbare Abwasser weist somit eine wesentlich höhere Güte auf, als das in herkömmlichen, lediglich eine Klär- und eine Belebungsstufe aufweisenden Anlagen behandelte Abwasser.

Die Konfiguration der Anlage erweist sich somit in vielerlei Hinsicht als vorteilhaft. Eine Anreicherung gelöster Stoffe bzw. von Mikropartikeln in aus der Kläranlage abgeleitetem Wasser wird vermieden bzw. wesentlich reduziert, das Brauchwasser kann somit für eine Vielzahl von Verwendungszwecken zur Verfügung gestellt werden und genügt - wie überraschend gefunden wurde - auch höheren Qualitätsanforderungen als herkömmlich geklärtes Abwasser.

Als günstig erweist es sich in diesem Zusammenhang, wenn in der Vorrichtung eine Nachkläreinheit, wie eingangs beschrieben, vorgesehen ist, die ganz oder teilweise mit einem Granulat gefüllter Filter ausgebildet ist.

Gegenüber herkömmlichen Filtern bringt die Verwendung von mit Granulat gefüllten Filtern in diesem Zusammenhang wesentliche Vorteile. Insbesondere bezüglich der Rückspülbarkeit des Filters ist ein granulatgefüllter Filter einem beispielsweise nur aus Membranen oder Kapillaren gebildeten Filter klar überlegen. Auch kann bei geeigneter Granulatsauswahl die Filterleistung, das heißt der Partikelgrößenbereich, in dem die Filtration eine mehre oder weniger vollständige Entfernung von Partikeln bewirkt, wesentlich erhöht werden.

Die Verwendung eines Granulatfilters lässt zudem die Anpassung des Filters bzw. der Nachkläreinheit an die zu entziehenden Stoffe zu. Auch kann über geeignete Kombination verschiedener Granulattypen ein sehr breites Spektrum an abzuscheidenden Stoffen, vor allem hinsichtlich Größe und chemischer Eigenschaft, abgedeckt werden.

Das Granulat ist bevorzugt geeignet, die Umbauprodukte ganz oder teilweise zu binden und somit die Reinheit des Abwassers beziehungsweise Brauchwassers und dessen Stofflast wesentlich zu verbessern bzw. zu verringern. Die Bindung der Umbauprodukte kann dabei chemisch oder physikalisch erfolgen. Die geeignete Auswahl von Granulaten bzw. Granulatzusammensetzungen spielt hierbei eine nicht zu vernachlässigende Rolle. So sind beispielsweise Granulate verfügbar, die aufgrund ihrer physikalischen Beschaffenheit einen siebartigen Granulatskörper zur Verfügung stellen, der gleichzeitig, aufgrund der chemischen Zusammensetzung, auch die Bindung einzelner im Abwasser vorhandener bzw. gelöster Stoffe erlaubt.

Als günstig wird in diesem Zusammenhang angesehen, wenn das Granulat ausgewählt ist aus der Gruppe bestehend aus Kies, Sand, insbesondere Quarzsand, gebrannten, gebrochenen Ton oder Keramik, Zeolith, Zeolithabkömmlingen wie Klinoptilolith oder Mischungen daraus.

Klinoptilolithe haben aufgrund ihrer Wirkung als Molekularsiebe viele Anwendungsgebiete. Zum Einen können diese Stoffe als Ionentauscher verwendet werden, zum Anderen kann auch ein physikalisches Abscheiden von gelösten Stoffen bzw. Schwebstoffen erfolgen, wenn das zu reinigende Wasser durch ein Klinoptilolith-Granulat geleitet und hierüber filtriert wird. Genutzt wird hierbei die diesen Stoffen innewohnende Fähigkeit, gelöste oder schwebende Stoffe zum einen zu adsorbieren, zum anderen zu absorbieren. Zeolithe haben ebenfalls vielfältige Anwendungsmöglichkeiten unter anderem als Ionenaustauscher etwa zur Wasserenthärtung und als Molekularsieb. Bei der Anwendung in der vorliegenden Vorrichtung werden je nach Einsatzzweck bzw. zu reinigendem Abwasser verschiedene Eigenschaften der Zeolithe genutzt: Der Ionenaustausch, das heißt die Fähigkeit der Zeolithe, ihre freien Kationen gegen andere auszutauschen, die Beseitigung von (auch radioaktiven) Schwermetallen aus Abwässern und deren Adsorptionskapazität, das heißt die Fähigkeit zum Einlagern neutraler Verbindungen in die Mikroporen der Kristallstruktur. Bei der Adsorption kann der Adsorptionsvorgang als solcher ausgenutzt werden. Aufgrund ihrer großen inneren Oberfläche können Zeolithe auch als Sorptionsmittel eingesetzt werden.

Zeolithe eignen sich auch zur Dekontamination der Abwässer, weil sie unter anderem Caesium und Strontium adsorbieren können.

Molekularsieb im Sinne der vorliegenden Erfindung ist die funktionelle Bezeichnung für natürliche und synthetische Zeolithe oder anderer Stoffe, die ein starkes Adsorptionsvermögen für gelöste Stoffe mit bestimmten Molekülgrößen haben. Durch eine geeignete Wahl des Molekularsiebes ist es möglich, Moleküle verschiedener Größen zu trennen. Die Molekularsiebe weisen eine große innere Oberfläche (beispielsweise mindestens 200 m²/g oder mindestens 400 m²/g, bevorzugt mindestens 600-700 m²/g) auf und haben mehr oder weniger einheitliche Porendurchmesser, die in der Größenordnung der Durchmesser der zu adsorbierenden Moleküle liegen. Das Molekularsieb Zeolith A hat beispielsweise eine Porenweite von 3Ä = 0,3 nm. In die Poren können somit nur Moleküle hineingelangen, die einen kleineren (wirksamen) Durchmesser als 0,3 nm haben. Mit Molekularsieben kann beispielsweise auch Wasser enthärtet werden. Üblich sind Molekularsiebe in gepulverter Stäbchen- oder Perlform verfügbar. Die gängigsten Porenweiten sind 3Ä, 4Ä, 5Ä und 10Ä. Die Molekularsiebe können dem Granulat beigemischt werden, um die Filtereigenschaften zu beeinflussen bzw. einzustellen. Insbesondere beschreibt das Vorgesagte eine vorteilhafte Ausgestaltung, bei welcher das Granulat fein- oder hochporig ausgebildet ist.

Als vorteilhaft wird erachtet, wenn das Granulat eine Korn- oder Partikelgröße von zwischen 0,4 und 3,0 mm, bevorzugt von zwischen 0,5 und 2,0 mm, insbesondere von zwischen 0,6 und 1,4 mm aufweist

Als vorteilhaft wird auch erachtet, wenn das Granulat eine Korn- oder Partikelgröße von zwischen 1 und 25 µm, bevorzugt von zwischen 7 und 15 µm, insbesondere von zwischen 8 und 12 µm aufweist. Dieses schließt jedoch Granulate mit größerer und kleinerer Partikelgröße nicht aus. Über die geeignete Mischung der Partikelgrößen kann eine Anpassung an die Filtrationsaufgaben durchgeführt werden.

Letztendlich definiert die Partikelgröße des Granulats die Filtrationsleistung der Vorrichtung.

In einer vorteilhaften Ausgestaltung ist vorgesehen, dass das Granulat eine Schüttdichte von 600-1200 kg/m³, bevorzugt 700-1000 kg/m³, insbesondere bevorzugt ca. 800 kg/m³ +/-10 % aufweist.

Das relativ geringe Raumgewicht erleichtert das Handling und den Transport einer solchen Nachkläreinheit.

Alternativ oder zusätzlich besteht selbstverständlich die Möglichkeit, dass die Nachkläreinheit einen oder mehrere Filtermembrane aufweisenden Membranfilter aufweist oder durch diesen gebildet ist. Durch einen derartigen Membranfilter kann entweder eine Filtration über ein Granulat vollständig ersetzt werden, wobei dann der Membranfilter eine gleichwertige und gleichwirkende Alternative zum Granulatsfilter darstellt, andererseits besteht selbstverständlich die Möglichkeit, die Filtration über das Granulat sinnvoll zu ergänzen und mit dem Membranfilter eine weiter verbesserte Filtrationsleistung, auch für nicht durch die Granulatfiltration erfasste Stoffe und Partikel zu erzielen.

In diesem Zusammenhang wird es als vorteilhaft angesehen, wenn die Filtermembrane eine Siebweite von zwischen 2 und 35 µm, insbesondere von zwischen 3 und 25µm, bevorzugt von zwischen 5 und 15 µm aufweist ohne die Erfindung hierauf zu beschränken. Es besteht auch die Möglichkeit, dass mehrere Filtermembrane gestaffelt hintereinander verwendet werden und jeweils eine sich sukzessive verringernde Siebweite aufweisen. Durch diese Staffelung wird, ähnlich wie bei eine Schichtung des Granulat, eine stufenweise Reduzierung der gelösten bzw. Schwebstoffe und Partikel im Abwasser erreicht und letztlich die Qualität des Filtrationsergebnisses wesentlich verbessert.

Wie bereits ausgeführt, besteht die Möglichkeit die Filtereigenschaften des Granulats und die der Membranfilter zu kombinieren.

Eine als günstig angesehene Weiterbildung der Erfindung stellt daher eine Nachkläreinheit zur Verfügung, die eine oder mehrere Schichten aus auch unterschiedlichen Filtermaterialien bzw. Filtermaterialzusammensetzungen aufweist. So können beispielsweise Filterabschnitte, die aus einer Granulatsschüttung gebildet sind im Wechsel mit Filtermembranen angeordnet werden. Je nach Filtrationsaufgabe kann so ein geeigneter Filter zusammengestellt werden, der zum einen eine chemische Absorption bzw. Adsorption der zu bindenden bzw. entfernenden Stoffe zulässt, zum anderen eine physikalische bzw. mechanische Filtration des Abwassers durchführt.

Als günstig wird in diesem Zusammenhang auch angesehen, wenn die Schichten geeignet sind, verschiedene Umbauprodukte, auch Um- oder Abbauprodukt, die sich aus der Verarbeitung der im Abwasser gelösten Stoffe mittels der in der biologischen Stufe angesiedelten Mikroorganismen bilden, selektiv dem Abwasser zu entziehen. Es kann dabei eine Bindung der Stoffe an den Filtermedien erfolgen oder zu einem mechanischen Zurückhalten durch die Filtermedien kommen. Die geeignete Kombination führt zu einem wesentlich verbesserten Filtrationsergebnis, das durch die Auswahl der Filtermedien und deren Anordnung in der Nachkläreinheit auf die spezifischen Anforderungen des zu bearbeitenden bzw. aufzureinigenden Abwassers abgestimmt werden kann.

Die in der erfindungsgemäßen Vorrichtung vorgesehene Nachkläreinheit weist einen im Wesentlichen säulen- oder kerzenförmigen Aufbau auf. Durch diesen Aufbau kann eine hohe Filtrationsleistung bei reduziertem Aufbaumaß erreicht werden. Die Nachkläreinheit hat bevorzugt einen Durchmesser von zwischen 20 und 50 cm, insbesondere von zwischen 25 und 45 cm, bevorzugt von zwischen 30 und 40 cm. Als günstig wird angesehen, wenn die Nachkläreinheit eine Höhe von zwischen 90 und 250 cm, insbesondere von zwischen 100 und 200 cm, bevorzugt von 125cm aufweist. Aus den vorgenannten Maßen bzw. dem Säulen- oder kerzenförmigen Aufbau der Nachkläreinheit ergeben sich die Vorteile, dass diese Einheit in einfacher und raumsparender Art und Weise in eine beispielsweise bestehende Anlage zur Abwasseraufreinigung integriert werden kann.

Als vorteilhaft erweist sich, wenn die Nachkläreinheit ein insbesondere unteres erstes Ende, und ein diesem im Wesentlichen gegenüberliegendes, insbesondere oberes zweites Ende aufweist. Der Aufbau ist dabei derart vorgesehen, dass im Bereich des ersten Endes ein Einlass bzw. Zulauf für das die Umbauprodukte bzw. sonstige gelöste und aus dem Abwasser zu entziehende Stoffe enthaltende Abwasser vorgesehen und im Bereich des zweiten Endes ein Auslass bzw. Ablauf für das gefilterte Abwasser angeordnet ist. Das in die Nachkläreinheit eingeleitete Abwasser durchläuft diese auf ganzer Höhe bzw. gesamter Länge und erfährt dabei eine Filtration, wobei sukzessive die Abbauprodukte, Partikel oder gelösten Stoffe aus dem Abwasser entfernt werden. Die Filterleistung bzw. Filteraufbau ist dabei so eingestellt, dass ein innerhalb eines Toleranzwertes für die Aufreinigung liegendes Reinigungsergebnis erzielt wird. Das aus dem Auslass austretende Abwasser ist dann beispielsweise geeignet, um als Brauchwasser verwendet zu werden. Alternativ oder gleichzeitig kann das aufgereinigte Wasser beispielsweise in einer Reinigungs- oder Waschanlage wiederverwertet werden. Auch für Verdünnungszwecke, beispielsweise für stark kontaminiertes Abwasser, kann das bereits aufgereinigte Wasser verwendet werden, indem es dem noch ungeklärten Abwasser am Beginn der Klärung wieder zugemischt wird.

Die Qualität und Geschwindigkeit der Filtration wird dadurch verbessert bzw. beschleunigt, dass die Nachkläreinheit über- und/oder unterdruckbeaufschlagbar ist. Dabei erweist es sich als vorteilhaft, wenn das die Umbauprodukte, Partikel oder gelösten Stoffe enthaltende Abwasser über- und/oder unterdruckbeaufschlagt in die Nachkläreinheit einbringbar ist. In einer als vorteilhaft angesehenen Ausführungsform ist vorgesehen, das die Nachkläreinheit über- und/oder unterdruckbeaufschlagbar ist, und das die Umbauprodukte, Partikel oder gelösten Stoffe enthaltende Abwasser vom ersten Ende her über- und/oder unterdruckbeaufschlagt in die Nachkläreinheit einbringbar ist. Das Abwasser steigt dabei in der Nachkläreinheit auf und durchläuft dabei die Filtrationsstufen.

Die Filtrationsleistung bleibt dauerhaft erhalten und kann bei kontinuierlichem Gebrauch der Vorrichtung wesentlicher verbessert werden, wenn der Nachkläreinheit eine Rückspüleinheit zugeordnet ist, insbesondere wobei eine Rückspülung mit über- und/oder unterdruckbeaufschlagtem Wasser vorgesehen ist. Die in den Filtermedien zurückgehaltenen Partikel werden bei der Rückspülung gelöst und geben dabei die Membranporen bzw. Granulatzwischenräume frei. Die bei der Rückspülung gelösten Partikel und Stoffe werden aus der Nachkläreinheit abgezogen und gesondert entsorgt bzw. deponiert. Selbstverständlich besteht auch die Möglichkeit, dass die Rückspüllösung, die Partikel und Stoffe enthält, der Filtration wieder zugeführt werden.

In diesem Zusammenhang wird es auch als vorteilhaft angesehen, wenn eine zyklische Rückspülung durchgeführt wird, um die Filtrationsleistung auf konstant hohem Niveau zu halten bzw. um ein Verstopfen des Filters zu vermeiden. Die Anzahl, Häufigkeit bzw. Länge der Rückspül-Zyklen richtet sich nach der Art und Befrachtung des Abwassers mit Abbauprodukten, gelösten Stoffen oder Partikeln. Eine Rückspülung kann beispielsweise auch mit, in der Nachkläreinheit aufbereitetem Abwasser erfolgen.

Erfindungsgemäß ist vorgesehen, dass in der Vorrichtung die Belebungseinheit bzw. -stufe nach Art eines fluidisierten Festbettes ausgebildet ist. Hierdurch wird die Durchmischung des Abwassers während des biologischen Abbaus bzw. Umbaus der zu entziehenden Stoffe und die Kontaktierung der Mikroorganismen wesentlich verbessert. Zudem wird über den Eintrag von Sauerstoff die Abbauleistung der aeroben Mikroorganismen wesentlich erhöht und das Umbau- bzw. Abbauergebnis somit verbessert.

Als vorteilhaft wird angesehen, wenn in der Belebungseinheit bzw. -stufe Mikroorganismen oder Mischungen von Mikroorganismen Verwendung finden. Diese Mikroorganismen sind dabei bevorzugt ausgewählt aus der Gruppe bestehend aus mineralöl-, fett-, eiweiß-, schwermetall- und/oder reinigungsmittelab- oder umbauenden Mikroorganismen. Durch geeignete Kombination verschiedener Mikroorganismen oder die Verwendung von zwei oder mehr Belebungseinheiten bzw. -stufen kann eine sukzessive Aufreinigung bzw. Bearbeitung des belasteten Abwassers erfolgen. Sind die Mikroorganismen, die auf verschiedene Ausgangsstoffe abzielen, kompatibel, können diese in ein und derselben Belebungseinheit bzw. -stufe angesiedelt werden, um dort die unterschiedlichen Stoffe umzubauen bzw. abzubauen.

Als vorteilhaft wird erachtet, wenn die Mikroorganismen auf in der Belebungsstufe vorgesehenen, insbesondere zirkulierenden Aufwuchskörpern immobilisiert sind.

Gleichermaßen von erfinderischer Bedeutung und von der vorliegenden Erfindung umfasst ist eine in einer wie zuvor ausgeführten Vorrichtung verwendbare Nachkläreinheit sowie deren Verwendung.

Die Nachkläreinheit zeichnet sich dabei durch einen ganz oder teilweise mit einem Granulat gefüllten Filterkörper aus. Die Verwendung eines Granulats als Filtrationsmedium bringt die oben bereits ausgeführten Vorteile mit sich. Die Verwendung von Granulat(en) erlaubt zudem eine kostengünstige Herstellung des Filterkörpers und damit der Nachkläreinheit. Auch die Wartung und Instandsetzung des Filters bzw. der Nachkläreinheit oder des Filterkörpers wird wesentlich vereinfacht, da bei einem Nachlassen der Filtrationsleistung ein Teil- oder Komplettaustausch des Filtermediums durchgeführt werden kann. Denkbar und möglich ist auch die Verwendung einer Filterkartusche, die in der Nachkläreinheit bzw. deren Gehäuse eingesetzt wird und das Granulat beinhaltet.

Je nach Ausgestaltung der Granulatszusammensetzung, ist das Granulat geeignet die Umbauprodukte ganz oder teilweise zu binden bzw. in der Nachkläreinheit zurückzuhalten. Die Granulateigenschaften können dabei abgestimmt werden auf die Stoffe, die dem Abwasser entzogen werden sollen. Granulat als Filtermedium weist den Vorteil auf, dass neben einer physikalischen bzw. mechanischen Filtration gleichzeitig eine chemische Bindung von gelösten Stoffen erfolgen kann. Diese werden an den Granulatkörpern gebunden bzw. von diesen aufgenommen und aufgrund chemischer Wechselwirkungen mit der Granulatsoberfläche vom Granulat absorbiert bzw. von diesem adsorbiert.

Die in der Nachkläreinheit verwendbaren Granulate wurden zuvor bereits ausgeführt und hinsichtlich ihrer Vorteile beschrieben. In der erfindungsgemäßen Nachkläreinheit wird es als günstig angesehen, wenn das Granulat ausgewählt ist aus der Gruppe bestehend aus Kies, Sand, beispielsweise Quarzsand, gebrochen gebranntem Ton oder Keramik, Zeolith, Zeolithabkömmlinge, Klinoptilolith, Klinoptilolithabkömmlinge oder Mischungen daraus. Die Erfindung ist hierauf jedoch nicht beschränkt. Verwendbar sind sämtliche dem Fachmann bekannten und für die Filtration in Nachkläreinheiten, Filterkerzen oder Säulenfiltern verwendbaren und geeigneten Medien, unabhängig davon, ob diese granular oder pulverförmig vorliegen.

Das Granulat bzw. die Granulatbestandteile weisen bevorzugt eine Korn- oder Partikelgröße von zwischen 1 und 25 µm, bevorzugt von zwischen 7 und 15 µm, insbesondere von zwischen 8 und 12 µm auf. Der Größenbereich ist jedoch nicht auf die vorgegebenen Werte beschränkt. Ebenfalls verwendbar sind sämtliche kleineren und größeren Partikelgrößen. So besteht auch die Möglichkeit, dass die Nachkläreinheit Sand oder Kies mit wesentlich größeren Korngrößen aufweist. Über ein derartiges Filtermedium bzw. hieraus gebildete Lage(n) in der Nachkläreinheit können Grobstoffe aus dem zuvor biologisch gereinigten Abwasser entfernt werden, bevor durch Granulate mit geringerer Partikel- bzw. Korngröße und unterschiedlichen chemischen Eigenschaften auch eine Abscheidung von gelösten Stoffen bzw. Stoffpartikeln erfolgt.

Neben bzw. alternativ zu den Granulatsschichten kann die Nachkläreinheit eine oder mehrere Filtermembrane aufweisen bzw. als ein oder mehrere Filtermembrane aufweisender Membranfilter ausgebildet sein. Die geeignete Kombination unterschiedlicher Filtermedien, das heißt Granulate bzw. Filtermembrane aber auch von Kapillaren, ermöglicht eine Einstellung der Filterleistung bzw. Filtereigenschaften und damit eine Anpassung an die jeweiligen Abwässer bzw. Abwasserbestandteile.

Werden in der Nachkläreinheit Filtermembrane verwendet, so weisen diese bevorzugt eine Siebweite von zwischen 2 und 35 µm, insbesondere von zwischen 3 und 25µm, bevorzugt von zwischen 5 und 15 µm auf.

Wie bei Beschreibung der Vorrichtung, wovon die hier genannte Nachkläreinheit Bestandteil ist, ausgeführt, steht die Möglichkeit, dass sich die Nachkläreinheit in einer bevorzugten Ausführungsform durch eine mehrschichtige Anordnung von zwei oder mehr unterschiedlichen Filtermaterialien oder durch eine Zusammensetzung unterschiedlicher Filtermaterialien auszeichnet. Die Filtermaterialien können dabei ausgewählt sein aus beispielsweise Filtermembranen bzw. Filtergranulaten. Auch der Einsatz von Kapillarfiltern ist von der Erfindung umfasst.

Die in der Nachkläreinheit bzw. dem Filterkörper vorgesehenen Schichten sind bevorzugt geeignet verschiedene Umbauprodukte selektiv zurückzuhalten und/oder zu binden.

Als günstig wird angesehen, wenn die Nachkläreinheit einen im Wesentlichen säulen- oder kerzenförmig ausgebildeten Filterkörper aufweist und dieser Filterkörper bevorzugt einen Durchmesser von zwischen 20 und 50 cm, insbesondere von zwischen 25 und 45 cm, bevorzugt von zwischen 30 und 40 cm und eine Höhe von zwischen 90 und 250 cm, insbesondere von zwischen 100 und 200 cm, bevorzugt von 125cm aufweist. Die Erfindung ist jedoch nicht auf die vorgenannten Werte beschränkt, denkbar und verwendbar sind selbstverständlich auch Filterkörper mit geringeren oder größeren Durchmessern bzw. geringeren oder größeren Höhen.

Der Filterkörper ist günstiger Weise in einem Gehäuse angeordnet, wobei das Gehäuse insbesondere eine dem Filterkörper entsprechende oder davon abweichende Ausformung aufweist. Das Gehäuse kann dabei beispielsweise aus Edelstahl gebildet werden. Gleichermaßen von der Erfindung umfasst ist eine Nachkläreinheit, in deren Gehäuse zwei oder mehr Filterkörper anordenbar sind. Hindurch kann eine stufenweise Filtration des Abwassers durchgeführt werden. Ebenfalls möglich ist eine Ausgestaltung, wobei der erste Filterkörper als Granulatfilter, der zweite Filterkörper als Membranfilter ausgestaltet ist. Weitere Kombinationen sind möglich, so kann die gesamte Nachkläreinheit Membranfilter als Filterkörper aufweisen bzw. nur aus Granulatfiltern gebildet werden. Zwei oder mehr Filterkörper sind dabei bevorzugt in Reihe und/oder in Serie angeordnet. Während die Reihenanordnung das Filtrationsergebnis sukzessive verbessert, kann durch Serienanordnung die Filtrationsgeschwindigkeit erhöht werden.

Die Nachkläreinheit ist bevorzugt derart ausgebildet, dass das Filtergehäuse und/oder der Filterkörper ein insbesondere unteres, erstes Ende und ein diesem im Wesentlichen gegenüberliegendes, insbesondere oberes, zweites Ende aufweist, wobei im Bereich des ersten Endes ein Einlass für das die Umbauprodukte enthaltende Abwasser und im Bereich des zweiten Endes ein Auslass für das gefilterte Abwasser vorgesehen ist.

Eine in diesem Zusammenhang stehende Ausführungsform der Nachkläreinheit sieht vor, dass die Nachkläreinheit über- und/oder unterdruckbeaufschlagbar ist, insbesondere wobei das die Umbauprodukte enthaltende Abwasser über- und/oder unterdruckbeaufschlagt in die Nachkläreinheit insbesondere den Filterkörper einbringbar ist.

Als vorteilhaft erweist sich dabei, wenn die Nachkläreinheit über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit insbesondere den oder die Filterkörper einbringbar ist.

Der Nachkläreinheit ist bevorzugt eine Rückspüleinheit zugeordnet. Die Rückspülung ist dabei bevorzugt mit über- und/oder unterdruckbeaufschlagtem Wasser vorgesehen.

Auch wird es als günstig angesehen, wenn eine zyklische Rückspülung der Nachkläreinheit bzw. des Filterkörpers, insbesondere mit in der Nachkläreinheit aufbereitetem Abwasser vorgesehen ist.

Die Erfindung umfasst auch ein Verfahren zum Aufbereiten von Abwasser, insbesondere mineralöl-, fett-, eiweiß- schwermetall- und/oder reinigungsmittelhaltigem Abwasser in einer wie zuvor ausgeführten Vorrichtung bzw. unter Verwendung einer wie oben beschriebenen Nachkläreinheit. Das Verfahren umfasst dabei mehrere Schritte. Um Feststoffe aus dem Abwasser zu entfernen wird dieses zunächst in einen Schlammfang eingeleitet, in dem eine Sedimentation der Feststoffe erfolgt. Das im Wesentlichen feststofffreie oder feststoffarme Abwasser wird danach in eine Belebungseinheit bzw. -stufe überführt, in der nachfolgend der biologische Abbau bzw. Umbau der im Abwasser gelösten Mineralöl-, Fett-, Eiweiß-Schwermetall- und/oder Reinigungsmittelrückstände erfolgt. Vorteilhafterweise ist der Belebungseinheit daher ein Schlammfang vorgeschaltet ist.

Der biologische Abbau bzw. Umbau erfolgt über geeignete Mikroorganismen, die sich beispielsweise auf Aufwuchskörpern angesiedelt haben, die in einem fluidisierten Festbett derart im Abwasser bewegt werden, dass ein möglichst dauerhafter und kontinuierlicher Kontakt mit dem Abwasser bzw. den darin enthaltenen Rückständen möglich ist. Geeignete, insbesondere schwammförmige Aufwuchskörper für die Mikroorganismen, stellen hierzu eine große Kontaktfläche zur Verfügung. Nach Behandlung des Abwassers in der biologischen Reinigungsstufe erfolgt eine Überführung des die Umbauprodukte aus der biologischen Aufbereitung und gegebenenfalls Rückstände der vorgenannten Stoffe enthaltenden Abwassers in eine Nachkläreinheit, insbesondere eine wie zuvor beschriebene Nachkläreinheit, worin dann das Abscheiden der Umbauprodukte oder sonstiger verbliebener Rückstände erfolgt.

Nach der Aufreinigung in der Nachkläreinheit steht soweit geklärtes Abwasser zur Verfügung, das dieses in eine nachgelagerte Verwendungsstufe überführt werden kann. So ist in einer als vorteilhaft angesehenen Weiterbildung des Verfahrens vorgesehen, eine Verdünnung des mineralöl-, fett-, eiweiß- schwermetall- und/oder reinigungsmittelhaltigen, noch ungeklärten Abwassers mit Frischwasser und/oder aufbereitetem Abwasser durchzuführen.

Um die Filtrationsleistung dauerhaft und mit gleichbleibender Qualität zur Verfügung zu stellen, ist in einem weiteren als günstig angesehenen Verfahrensschritt vorgesehen, ein Rückspülen der Nachkläreinheit mit Frischwasser und/oder aufbereitetem Abwasser durchzuführen. Das Rückspül- bzw. Reinigungsergebnis für die Nachkläreinheit wird dadurch wesentlich verbessert, dass das Rückspülen mit über- und/oder unterdruckbeaufschlagtem Frischwasser und/oder aufbereitetem Abwasser durchgeführt wird. In diesem Zusammenhang kann bevorzugt eine Rückleitung des für die Rückspülung verwendeten Frischwasser oder von aufbereitetem Abwasser in den Schlammfang oder die Belebungseinheit bzw. -stufe erfolgen.

Die Erfindung umfasst gleichermaßen die Verwendung einer Nachkläreinheit bzw. der zuvor beschriebenen Filterkörper in dem beschriebenen Verfahren. Die Erfindung hat insgesamt wesentliche Vorteile gegenüber herkömmlichen Klärverfahren. In vorteilhafter Weise kombiniert die erfindungsgemäße Vorrichtung ebenso wie das erfindungsgemäße Verfahren die bekannte Klärung von Abwasser in Absetz- und Belebungsbecken bzw. eine diesem nachgeordnete biologische Aufbereitung mittels Mikroorganismen mit der Filtration des Abwassers. Während bei einer herkömmlichen Klärung ein Großteil von gelösten Stoffen nicht oder nur ungenügend aus dem Abwasser entfernt wird, erfolgt bereits eine Verbesserung bekannter Verfahren durch die zusätzliche Verwendung einer biologischen Klärstufe, in der beispielsweise auf Aufwuchskörpern angesiedelte Mikroorganismen vorgesehen sind, die speziell geeignet sind, um gelöste Stoffe, Öle, Reinigungsmittelrückstände, Schwermetalle, Salze, Eiweiße oder dergleichen ab- bzw. umzubauen. Die Umbauprodukte aus der biologischen Umsetzung verbleiben jedoch in der Regel im Abwasser. Überraschend hat sich daher gezeigt, dass die nachgeordnete Filtration in einem Granulat-, Kapillar- oder Membranfilter bzw. einer Nachkläreinheit, die diese Filtermedien in geeigneter Kombination aufweist, zu einer wesentlichen Verbesserung der Filtrationsleistung und einer Verbesserung der Qualität des Abwassers führt. Es wird somit die bereits in der biologischen Klärstufe stattfindende Sedimentation der Umbauprodukte ergänzt durch einen weiteren Abzug dieser Umbauprodukte und die gleichzeitige weitere Bindung von gelösten und durch die Mikroorganismen nicht oder nur ungenügend erfassten Stoffen an den Filtermedien. Die erfindungsgemäße Vorrichtung bildet somit bekannte Vorrichtungen zur Aufbereitung von Abwasser vorteilhaft und erfinderisch weiter und erlaubt aufgrund der Ausgestaltung der Nachkläreinheit bzw. Nachkläreinheiten sowie der darin vorgesehenen Filterkörper auch den Auf- bzw. Ausbau bestehender Vorrichtungen mit dem Ziel, die Filtrationsleistung wesentlich zu verbessern.

In diesem Zusammenhang wird insbesondere darauf hingewiesen, dass alle im Bezug auf die Vorrichtung oder der Nachkläreinheit beschriebenen Merkmale und Eigenschaften aber auch Verfahrensweisen sinngemäß auch bezüglich der Formulierung des erfindungsgemäßen Verfahrens beziehungsweise Verwendung übertragbar und im Sinne der Erfindung einsetzbar und als mitoffenbart gelten. Gleiches gilt auch in umgekehrter Richtung, d. h. nur im Bezug auf das Verfahren oder Verwendung genannte, bauliche also vorrichtungsgemäße Merkmale können auch im Rahmen der Ansprüche für die Vorrichtung bzw. Nachkläreinheit berücksichtigt und beansprucht werden und zählen ebenfalls zur Erfindung und zur Offenbarung. Die Merkmale der beschriebenen bevorzugten Ausführungsformen können selbstverständlich auch nur einzeln oder in Kombination zur Weiterbildung der Vorrichtung herangezogen werden.

In den Zeichnungen ist die Erfindung insbesondere in Ausführungsbeispielen schematisch dargestellt. Es zeigt:
- Fig. 1: Eine bevorzugte Ausführungsformen der erfindungsgemäßen Vorrichtung in schematischer der Darstellung, und
- Fig. 2, 3: je eine Ausführungsform der erfindungsgemäßen Nachkläreinheit in Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

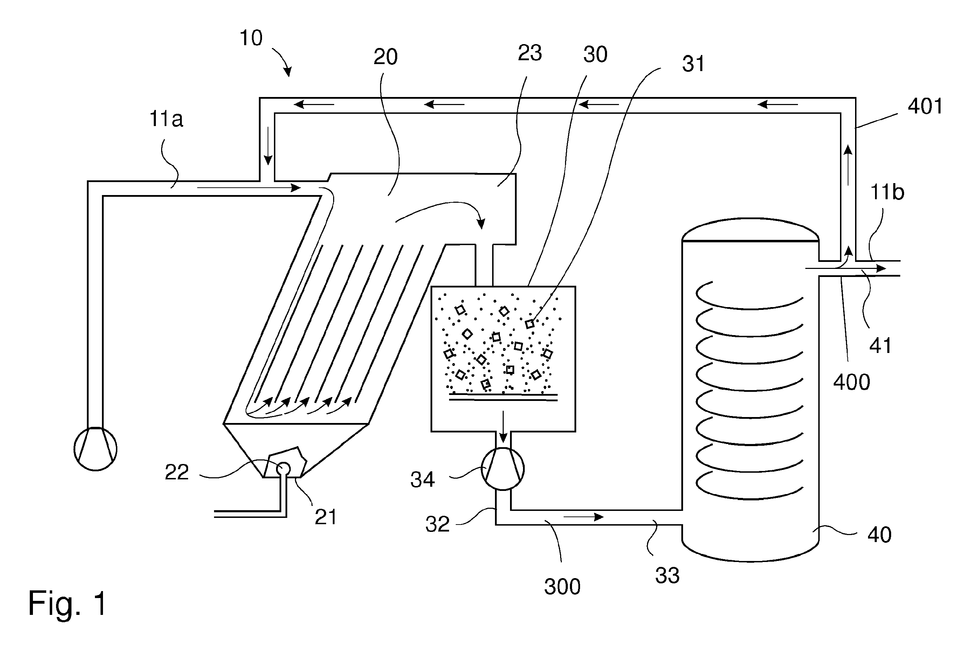

Figur 1 zeigt eine Vorrichtung zur Aufbereitung von Abwasser 10. Über eine Zuführleitung 11a wird mineralöl-, fett-, eiweiß-, schwermetall-, salz- und/oder reinigungsmittelhaltiges Abwasser in einen Schlammfang 20 eingeleitet. Dort werden im Abwasser mitgeführte Feststoffe durch Sedimentation aus dem Abwasser abgeschieden. Die abgesetzten Feststoffe werden über einen an der Unterseite 21 des Schlammfang 20 angeordneten Abzug 22 entnommen und beispielsweise deponiert oder in sonstiger geeigneter Form weiter verwendet. Das im Schlammfang 20 eingeleitete Abwasser wird an dessen Oberseite 23 aus dem Schlammfang 20 abgezogen und in eine nachgelagerte Belebungsstufe 30 eingeleitet. In der Belebungsstufe 30, die im Ausführungsbeispiel nach Art eines fluidisierten Festbettes ausgeführt ist, befindet sich eine Vielzahl von Aufwuchskörpern 31 auf denen Mikroorganismen mobilisiert sind, die in der Lage sind, die in dem Abwasser gelösten Stoffe, insbesondere Mineralöl, Fett, Eiweiß, Schwermetalle, Salze und/oder Reinigungsmittel bzw. deren Rückstände umzubauen. Dieser biologische Umbau wird über die Mikroorganismen realisiert, die in geeigneter Mischung in der Belebungsstufe 30 vorgesehen sind. Die Aufwuchskörper 31, die beispielsweise schwammartig oder als mit Poren versehene Körper ausgebildet sind, stellen eine große Oberfläche für den Aufwuchs der Mikroorganismen zur Verfügung. Durch die Verwirbelung der Aufwuchskörper 31 in der Belebungsstufe 30 kommt es zum dauerhaften und kontinuierlichen Kontakt der Mikroorganismen mit den Abwässern bzw. den darin ihre gelösten Stoffen. Hierdurch wird der biologische Umbau begünstigt. Dieser Umbau führt zu Umbauprodukten, die sich einerseits in der Belebungsstufe 30 absetzen und als Schlamm entnommen werden können, andererseits zu weiter gelösten Stoffen, die nach wie vor im Abwasser vorhanden sind und in der Belebungsstufe 30 nicht sedimentieren. Das die die gelösten Stoffe oder sonstige Partikel enthaltende biologisch behandelte Abwasser wird aus der Belebungsstufe 30 an deren Grund 32 abgezogen und über den Zulauf 33 in die Nachkläreinheit 40 überführt. Im Ausführungsbeispiel ist hierzu eine Pumpe 34 vorgesehen, durch die das abgezogene Abwasser druckbeaufschlagt in die Nachkläreinheit 40 eingeleitet werden kann. Das Abwasser wird von unten her in die Nachkläreinheit 40 eingeleitet und steigt in dieser auf. Die Nachkläreinheit 40 ist im Ausführungsbeispiel als säulenartiger Filter ausgeführt. Das in die Nachkläreinheit 40 eingeleitete Abwasser wird druckbeaufschlagt durch die in der Nachkläreinheit 40 vorgesehenen Schichten aus Filtrationsmedien gedrückt und die noch im Abwasser vorhandenen Partikel bzw. gelösten Stoffe an den Filtermedien gebunden bzw. von diesen zurückgehalten. Am im Ausführungsbeispiel oberen Ende der Nachkläreinheit 40 befindet sich ein Ablauf 41 über den das weiter aufgereinigte Abwasser aus der Nachkläreinheit 40 abgezogen, bevorzugt abgepumpt wird. Das somit aufgereinigte Abwasser hat wenigstens Brauchwasserqualität und kann entsprechend verwendet werden. Gleichzeitig besteht auch die Möglichkeit, das s ein Teil des aufgereinigten Brauchwassers aus der Nachkläreinheit 40 über eine entsprechende Leitung 11b wieder dem Schlammfang 20 beziehen dem dort eingeleiteten unbehandelten Abwasser zugemischt wird, um eine Verdünnung zu erzielen.

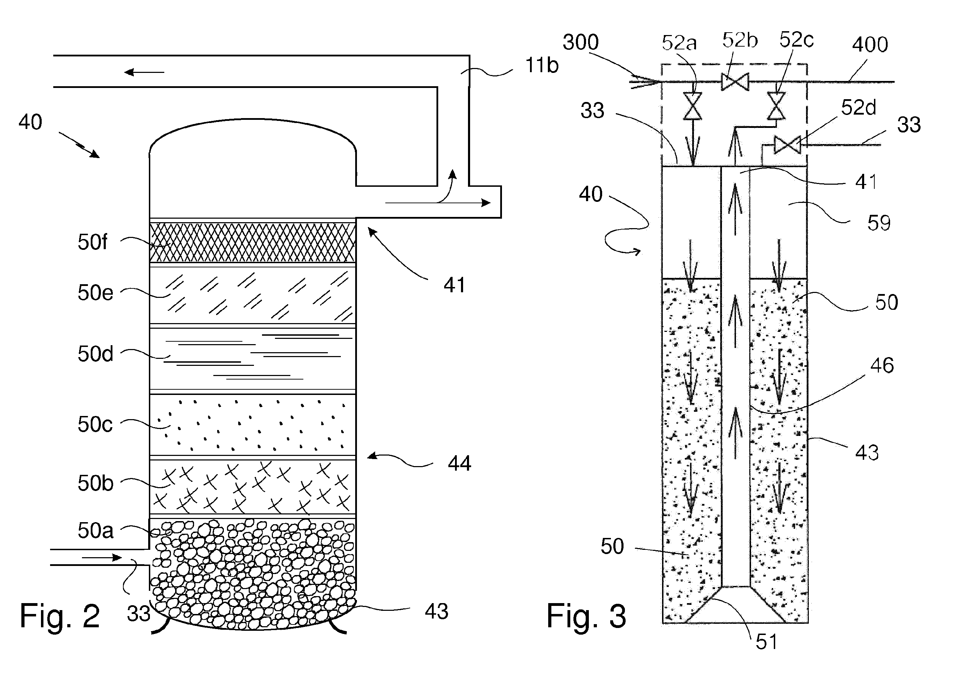

Figur 2 zeigt eine detaillierte Darstellung der Nachkläreinheit 40. Über den unten an der Nachkläreinheit 40 angeordneten Zulauf 33 wird das in einer vorgelagerten Belebungsstufe 30 (vergleiche Figur 1) biologisch aufbereitete Abwasser mit darin noch enthaltenen Umbauprodukten bzw. gelösten und in der biologischen Aufreinigung nicht erfassten Stoffen in die Nachkläreinheit 40 eingeleitet. Die Einleitung erfolgt druckbeaufschlagt. Die Nachkläreinheit 40 weist im Ausführungsbeispiel mehrere Schichten 50a bis 50f auf, die aus unterschiedlichen Filtermedien gebildet sind. Dem Zulauf 33 direkt nachgeordnet ist eine aus einem Grobmaterial, bzw. Kies oder Sand gebildete erste Schicht 50a, in der im Abwasser mitgeführte Feststoffe aus diesem entzogen werden. Diese Schicht 50a kann beispielsweise aus Granulaten, Kies oder Sand gebildet werden, die einen entsprechend großen Korngrößendurchmesser aufweisen. Die Korngrößendurchmesser verringern sich in den nachfolgenden Schichten 50b bis 50f sukzessive, wodurch eine kontinuierlich verbesserte Filtration ermöglicht wird. Neben einem mechanischen Rückhalt von im Abwasser mitgeführten Feststoffen oder Partikel sind die Schichten 50a bis 50f auch geeignet, eine chemische Bindung der gelösten Stoffe bzw. Stoffbestandteile durchzuführen. Die Nachkläreinheit 40 ermöglicht somit auch die Bindung von unter Umständen durch die Mikroorganismen nicht erfassten oder erfassbaren Stoffen und deren Entzug aus dem Abwasser. Über den oberseits an der Nachkläreinheit 40 vorgesehenen Ablauf 41 tritt das gereinigte Abwasser aus der Nachkläreinheit 40 aus und kann in den Wasserkreislauf zurückgeführt werden. Gleichzeitig besteht hier die Möglichkeit der Anordnung einer weiteren Leitung 11b, über die ein Rücklauf des aufgereinigten Wassers, beispielsweise in die Belebungsstufe 30 bzw. den Schlammfang 20 oder die diesem vorgelagerte erste Leitung 11a erfolgt. Das aufgereinigte Wasser kann hierbei zu Verdünnungszwecken verwendet werden. Nicht dargestellt ist eine der Nachkläreinheit 40 zugeordnete Rückspülvorrichtung, über die ein zyklisches, insbesondere auch druckbeaufschlagtes Rückspülen der Nachkläreinheit 40 durchgeführt wird, um die in den Schichten 50a bis 50f zurückgehaltenen Stoffe bzw. Partikel zu lösen und über den Zulauf 33 in gegenläufiger Strömungsrichtung aus der Nachkläreinheit 40 abzuziehen. Hierdurch wird die Filtrationsleistung der Nachkläreinheit 40 dauerhaft sichergestellt. Neben dem zyklischen Rückspülen besteht selbstverständlich auch die Möglichkeit, dass die Schichten 50a bis 50f regelmäßig aus der Nachkläreinheit 40 entnommen und entsorgt werden. Die in den Filtermedien gebundenen Stoffe und Partikel werden dabei ebenfalls entnommen und zusammen mit dem Filtermaterial deponiert oder in sonstiger geeigneter Art und Weise verwertet. Zusätzlich zu den granularen und/oder pulverförmigen Filtermedien, wie im Zusammenhang mit der vorliegenden Nachkläreinheit 40 beschrieben, besteht selbstverständlich auch die Möglichkeit das die gezeigten Schichten 50a bis 50f durch geeignete Filtermembrane oder Kapillarfilter ergänzt bzw. ersetzt werden. Möglich ist auch eine Ausgestaltung der Nachkläreinheit 40, wobei diese ausschließlich Filtermembrane und/oder Kapillarfilter aufweist.

Die Nachkläreinheit 40 weißt ein Gehäuse 43 auf, dass beispielsweise aus Edelstahl gebildet ist. Die Schichten 50a bis 50f bilden dabei den eigentlichen Filterkörper 44 aus, der im Gehäuse 43 beispielsweise durch Schüttung angeordnet wird. Dieser Filterkörper 44 kann selbstverständlich auch als gesonderte Einheit ausgebildet und im Gehäuse 43 angeordnet werden. Diese Ausgestaltung hat den Vorteil, dass der Filterkörper 44 zum Austausch bzw. zur Aufbereitung in einfacher Art und Weise aus dem Gehäuse 43 entnommen werden kann.

Auch kann ein auf verschiedene Filtrationsaufgaben abgestimmter Filterkörper 44 zur Verfügung gestellt werden, der bedarfsweise in die Nachkläreinheit 40 eingesetzt und auch aus dieser wieder entnommen werden kann.

In Figur 3 ist ein weiteres Ausführungsbeispiel für eine Nachkläreinheit 40 gezeigt. Die normale Fließrichtung des belebten, und dann auch nachgeklärten Abwasser ist mit einer Reihe von Pfeilen gekennzeichnet. Für den Fall der Reinigung (Rückspülung) der Nachkläreinheit 40 ist die Fließrichtung des Wassers durch die Nachkläreinheit der hier gezeigten Pfeilrichtung entgegengesetzt. Sie unterscheidet sich zu der in Figur 2 gezeigten Variante darin, dass einerseits Zulauf 33 und Ablauf 41 am gleichen Ende, nämlich oben, am Gehäuse 43 der Nachkläreinheit 40 angeordnet sind. Außerdem ist der ist die Nachkläreinheit 40 bzw. der Filterkörper 44 nur mit einer Sorte von Granulat teilgefüllt.

Die Anordnung ist dabei so gewählt, dass sich im Zuleitungsstrang 300, der auch den Zulauf 33 umfasst, einem Abzweig vorgesehen ist, und der eigentliche Zulauf 33 in die Nachkläreinheit 40 erfolgt über das regelbare Ventile 52 a. Eingangsseitig ist dieses steuerbares Ventil 52 a an den Zuleitungsstrang 300 angeschlossen, ausgangsseitig leitete es im geöffneten Zustand das belebte Abwasser in die Nachkläreinheit 40 ein. Die Nachkläreinheit 40 ist dabei rotationssymmetrisch, tonnen- oder säulenartig aufgebaut. Der Zulauf 33, es können auch mehrere sein, befindet sich im radial äußeren Bereich der oberen Abschlussplatte der Nachkläreinheit 40. Für den Fall, dass mehrere Zuläufe 33 vorgesehen sind, befinden sich auch diese bevorzugt im radial äußeren Bereich, und sind ebenfalls je durch steuerbarer Ventile 52 d absperrbar. Da die Nachkläreinheit 40 nicht vollständig mit Granulat gefüllt ist, ergibt sich im oberen Bereich ein leerer Raum 59, in dem sich das einlaufende, belebte Abwasser umfangsmäßig über die gesamte Oberfläche des Granulates verteilen kann, um dann in das Granulat einzusickern.

In dem in Figur 3 gezeigten Ausführungsbeispiel ist der Ablauf 41 zentral, mittig, als Steigrohr 46 angeordnet und führt vom unten nach oben. Am unteren Ende des Steigrohrs 46 /Ablaufes 41 ist eine Membranfilter 51 vorgesehen, die verhindert, dass das Granulat 50 in die in das Steigrohr 46 eindringt. Um optimale hydraulische Eigenschaften zu erreichen ist der Aufbau möglichst rotationssymmetrisch.

Der Zulaufstrang 300 ist von einem Ablaufstrang 400 durch das steuerbare Ventil 52 b getrennt. In Flussrichtung des Abwassers befindet sich der Einlauf des Ablaufes 41, der ebenfalls durch ein steuerbares Ventil 52 c abschließbar ist, in den Ablaufstrang 400, hinter dem Relaisventil 52 b.

Das nachgeklärte Abwasser, dass die Nachkläreinheit 40 verlässt, wird über den Ablaufstrang 400 entweder zurück gekoppelt in den Schlammfang 20 (siehe hierzu Leitung 401 in Figur 1) oder gelangt über die Leitung 11 b (siehe ebenfalls Figur1) in eine nicht dargestellte Brauchwasservorlage.

Die Erfindung umfasst folgende Gegenstände:
Eine Vorrichtung 10 zur Aufbereitung von Abwasser, insbesondere mineralöl-, fett-, eiweiß-, schwermetall-, salz- und/oder reinigungsmittelhaltigem Abwasser, umfassend oder aufweisend:
   - wenigstens einen Schlammfang 20 und
   - wenigstens eine Belebungseinheit oder Belebungsstufe 30 zum biologischen Umbau von im Abwasser gelösten Stoffen, insbesondere Mineralöl, Fett, Eiweiß, Schwermetalle, Salze und/oder Reinigungsmittel oder Rückständen der vorgenannten, wobei
wenigstens eine räumlich von der Belebungseinheit oder Belebungsstufe 30 getrennte Nachkläreinheit 40 für das die Umbauprodukte enthaltende Abwasser vorgesehen ist.

Eine wie zuvor ausgeführte Vorrichtung 10, wobei die Nachkläreinheit 40 als ganz oder teilweise mit einem Granulat gefüllter Filter ausgebildet ist.

Eine wie zuvor ausgeführte Vorrichtung 10, wobei das Granulat geeignet ist die Umbauprodukte ganz oder teilweise zu binden.

Eine wie zuvor ausgeführte Vorrichtung 10, wobei das Granulat ausgewählt ist aus der Gruppe bestehend aus Kies, Sand, Zeolith, Zeolithabkömmlinge, Klinoptilolith, Klinoptilolithabkömmlinge oder Mischungen daraus.

Eine wie zuvor ausgeführte Vorrichtung 10, wobei das Granulat eine Korn- oder Partikelgröße von zwischen 1 und 25 µm, bevorzugt von zwischen 7 und 15 µm, insbesondere von zwischen 8 und 12 µm aufweist.

Eine wie zuvor ausgeführte Vorrichtung 10, wobei die Nachkläreinheit 40 einen eine oder mehrere Filtermembrane aufweisenden Membranfilter aufweist.

Eine wie zuvor ausgeführte Vorrichtung 10, wobei die Filtermembrane eine Siebweite von zwischen 2 und 35 µm, insbesondere von zwischen 3 und 25µm, bevorzugt von zwischen 5 und 15 µm aufweist.

Eine wie zuvor ausgeführte Vorrichtung 10, wobei die Nachkläreinheit 40 eine oder mehrere Schichten 50a-f aus auch unterschiedlichen Filtermaterialien bzw. Filtermaterialzusammensetzungen aufweist.

Eine wie zuvor ausgeführte Vorrichtung 10, wobei die Schichten 50a-f geeignet sind verschiedene Umbauprodukte selektiv zurückzuhalten und/oder zu binden.

Eine wie zuvor ausgeführte Vorrichtung 10, wobei die Nachkläreinheit 40 einen im Wesentlichen säulen- oder kerzenförmigen Aufbau aufweist.

Eine wie zuvor ausgeführte Vorrichtung 10, wobei die Nachkläreinheit 40 einen Durchmesser von zwischen 20 und 50 cm, insbesondere von zwischen 25 und 45 cm, bevorzugt von zwischen 30 und 40 cm aufweist.

Eine wie zuvor ausgeführte Vorrichtung 10, wobei die Nachkläreinheit 40 eine Höhe von zwischen 90 und 250 cm, insbesondere von zwischen 100 und 200 cm, bevorzugt von 125cm aufweist.

Eine wie zuvor ausgeführte Vorrichtung 10, wobei die Nachkläreinheit 40 ein, insbesondere unteres, erstes Ende und ein diesem im Wesentlichen gegenüberliegendes, insbesondere oberes, zweites Ende aufweist, wobei im Bereich des ersten Endes ein Einlass bzw. Zulauf 33 für das die Umbauprodukte enthaltende Abwasser und im Bereich des zweiten Endes ein Auslass bzw. Ablauf 41, für das gefilterte Abwasser vorgesehen ist.

Eine wie zuvor ausgeführte Vorrichtung 10, wobei die Nachkläreinheit 40 über- und/oder unterdruckbeaufschlagbar ist, insbesondere wobei das die Umbauprodukte enthaltende Abwasser über- und/oder unterdruckbeaufschlagt in die Nachkläreinheit 40 einbringbar ist.

Eine wie zuvor ausgeführte Vorrichtung 10, wobei die Nachkläreinheit 40 über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit 40 einbringbar ist.

Eine wie zuvor ausgeführte Vorrichtung 10, wobei der Nachkläreinheit 40 eine Rückspüleinheit zugeordnet ist, insbesondere wobei eine Rückspülung mit über- und/oder unterdruckbeaufschlagtem Wasser vorgesehen ist.

Eine wie zuvor ausgeführte Vorrichtung 10, wobei eine zyklische Rückspülung, insbesondere mit in der Nachkläreinheit 40 aufbereitetem Abwasser, vorgesehen ist.

Eine wie zuvor ausgeführte Vorrichtung 10, wobei die Belebungseinheit oder Belebungsstufe 30 nach Art eines fluidisierten Festbettes ausgebildet ist.

Eine wie zuvor ausgeführte Vorrichtung 10, wobei in der Belebungseinheit oder Belebungsstufe 30 Mikroorganismen oder Mischungen von Mikroorganismen, insbesondere Mikroorganismen ausgewählt aus der Gruppe bestehend aus mineralöl-, fett-, eiweiß-, schwermetall- und/oder reinigungsmittelab- oder umbauenden Mikroorganismen vorgesehen sind.

Eine wie zuvor ausgeführte Vorrichtung 10, wobei die Mikroorganismen auf in der Belebungseinheit oder Belebungsstufe 30 vorgesehenen, insbesondere zirkulierenden Aufwuchskörpern 31 immobilisiert sind.

Eine Nachkläreinheit 40, insbesondere in einer wie zuvor beschriebenen Vorrichtung vorgesehene bzw. verwendbare Nachkläreinheit 40.

Eine wie zuvor ausgeführte Nachkläreinheit 40, die einen ganz oder teilweise mit einem Granulat gefüllten Filterkörper 44 aufweist.

Eine wie zuvor ausgeführte Nachkläreinheit 40, wobei das Granulat geeignet ist die Umbauprodukte ganz oder teilweise zu binden.

Eine wie zuvor ausgeführte Nachkläreinheit 40, wobei Granulat ausgewählt ist aus der Gruppe bestehend aus Kies, Sand, bevorzugt Quartzsand, Zeolith, Zeolithabkömmlinge, Klinoptilolith, Klinoptilolithabkömmlinge oder Mischungen daraus.

Eine wie zuvor ausgeführte Nachkläreinheit 40, wobei das Granulat eine Korn- oder Partikelgröße von zwischen 1 und 25 µm, bevorzugt von zwischen 7 und 15 µm, insbesondere von zwischen 8 und 12 µm aufweist.

Eine wie zuvor ausgeführte Nachkläreinheit 40, die einen eine oder mehrere Filtermembrane aufweisenden Membranfilter aufweist.

Eine wie zuvor ausgeführte Nachkläreinheit 40, wobei die Filtermembrane eine Siebweite von zwischen 2 und 35 µm, insbesondere von zwischen 3 und 25µm, bevorzugt von zwischen 5 und 15 µm aufweist.

Eine wie zuvor ausgeführte Nachkläreinheit 40, die eine mehrschichtige Anordnung von zwei oder mehr unterschiedlichen Filtermaterialien bzw. eine Zusammensetzungen unterschiedlicher Filtermaterialien aufweist.

Eine wie zuvor ausgeführte Nachkläreinheit 40, wobei die Schichten 50a - 50f geeignet sind verschiedene Umbauprodukte selektiv zurückzuhalten und/oder zu binden.

Eine wie zuvor ausgeführte Nachkläreinheit 40, die einen im Wesentlichen säulen- oder kerzenförmig ausgebildeten Filterkörper 44 aufweist.

Eine wie zuvor ausgeführte Nachkläreinheit 40, wobei der Filterkörper 44 einen Durchmesser von zwischen 20 und 50 cm, insbesondere von zwischen 25 und 45 cm, bevorzugt von zwischen 30 und 40 cm aufweist.

Eine wie zuvor ausgeführte Nachkläreinheit 40, wobei der Filterkörper 44 eine Höhe von zwischen 90 und 250 cm, insbesondere von zwischen 100 und 200 cm, bevorzugt von 125cm aufweist.

Eine wie zuvor ausgeführte Nachkläreinheit 40, wobei der Filterkörper 44 in einem Gehäuse 43 angeordnet ist, insbesondere wobei das Gehäuse eine dem, Filterkörper 44 entsprechende oder davon abweichende Ausformung aufweist.

Eine wie zuvor ausgeführte Nachkläreinheit 40, wobei im Gehäuse 43 zwei oder mehr Filterkörper 44 anordenbar sind.

Eine wie zuvor ausgeführte Nachkläreinheit 40, der zwei oder mehr in Reihe und/oder in Serie angeordnete Filterkörper 44 aufweist.

Eine wie zuvor ausgeführte Nachkläreinheit 40, wobei die Nachkläreinheit 40 das Filtergehäuse 43 und/oder der Filterkörper 44 ein, insbesondere unteres, erstes Ende und ein diesem im Wesentlichen gegenüberliegendes, insbesondere oberes, zweites Ende aufweist, wobei im Bereich des ersten Endes ein Einlass oder Zulauf 33 für das die Umbauprodukte enthaltende Abwasser und im Bereich des zweiten Endes ein Auslass oder Ablauf 41 für das gefilterte Abwasser vorgesehen ist.

Eine wie zuvor ausgeführte Nachkläreinheit 40, wobei die Nachkläreinheit 40 über- und/oder unterdruckbeaufschlagbar ist, insbesondere wobei das die Umbauprodukte enthaltende Abwasser über- und/oder unterdruckbeaufschlagt in die Nachkläreinheit 40 insbesondere den Filterkörper 44 einbringbar ist.

Eine wie zuvor ausgeführte Nachkläreinheit 40, wobei die Nachkläreinheit 40 über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit 40, insbesondere den Filterkörper 44 einbringbar ist.

Eine wie zuvor ausgeführte Nachkläreinheit 40, wobei der Nachkläreinheit 40 eine Rückspüleinheit zugeordnet ist, insbesondere wobei eine Rückspülung mit über- und/oder unterdruckbeaufschlagtem Wasser vorgesehen ist.

Eine wie zuvor ausgeführte Nachkläreinheit 40, wobei eine zyklische Rückspülung, insbesondere mit in der Nachkläreinheit 40 aufbereitetem Abwasser vorgesehen ist.

Ein Verfahren zum Aufbereiten von Abwasser, insbesondere mineralöl-, fett-, eiweiß- schwermetall- und/oder reinigungsmittelhaltigem Abwasser in einer wie zuvor beschriebenen Vorrichtung 10 und/oder unter Verwendung einer wie zuvor ausgeführten Nachkläreinheit 40 umfassend oder aufweisend die Schritten:
a) Absetzen von Feststoffen in einem Schlammfang 20,
b) Überführen des im Wesentlichen feststofffreien oder feststoffarmen Abwassers in eine Belebungseinheit oder Belebungsstufe 30,
c) Biologischer Umbau der im Abwasser gelösten Mineralöl-, Fett-, Eiweiß- Schwermetall- und/oder Reinigungsmittelrückstände,
d) Überführen des die Umbauprodukte enthaltenden Abwassers in eine Nachkläreinheit 40, insbesondere eine wie zuvor ausgeführt ausgebildete Nachkläreinheit 40,
e) Abscheiden der Umbauprodukte in der Nachkläreinheit 40, und
f) Überführen des aufbereiteten Abwassers in eine nachgelagerte Verwendungsstufe.

Ein wie zuvor ausgeführtes Verfahren, wobei eine Verdünnung des mineralöl-, fett-, eiweiß- schwermetall- und/oder reinigungsmittelhaltigen Abwassers mit Frischwasser und/oder aufbereitetem Abwasser vorgesehen ist.

Ein wie zuvor ausgeführtes Verfahren, wobei der weitere Schritt:
g) Rückspülen der Nachkläreinheit mit Frischwasser und/oder aufbereitetem Abwasser, vorgesehen ist.

Ein wie zuvor ausgeführtes Verfahren, wobei Schritt g) mit über- und/oder unterdruckbeaufschlagtem Frischwasser und/oder aufbereitetem Abwasser durchgeführt wird.

Ein wie zuvor ausgeführtes Verfahren, wobei eine Rückleitung des für die Rückspülung verwendeten Frischwasser oder aufbereitetem Abwasser in den Schlammfang 20 oder die Belebungseinheit bzw. Belebungsstufe 30 erfolgt.

Die Erfindung umfasst die folgenden Gegenstände:
Eine Vorrichtung 10 zur Aufbereitung von Abwasser, insbesondere mineralöl-, fett-, eiweiß-, schwermetall-, salz- und/oder reinigungsmittelhaltigem Abwasser, umfassend oder aufweisend:
   - wenigstens einen Schlammfang 20 und
   - wenigstens eine Belebungseinheit zum biologischen Umbau von im Abwasser gelösten Stoffen, insbesondere Mineralöl, Fett, Eiweiß, Schwermetalle, Salze und/oder Reinigungsmittel oder Rückständen der vorgenannten, wobei
wenigstens eine räumlich von der Belebungseinheit getrennte Nachkläreinheit 40 für das die Umbauprodukte enthaltende Abwasser vorgesehen ist.

Eine wie zuvor ausgeführte Vorrichtung 10, wobei die Nachkläreinheit 40 als ganz oder teilweise mit einem Granulat gefüllter Filter oder Filterkörper 44 ausgebildet ist.

Eine wie zuvor ausgeführte Vorrichtung 10, wobei das Granulat geeignet ist, die Umbauprodukte ganz oder teilweise zu binden.

Eine wie zuvor ausgeführte Vorrichtung 10, wobei das Granulat ausgewählt ist, aus der Gruppe bestehend aus Kies, Sand, insbesondere Quarzsand, Zeolith, Zeolithabkömmlinge, Klinoptilolith, Klinoptilolithabkömmlinge oder Mischungen daraus.

Eine wie zuvor ausgeführte Vorrichtung 10, wobei das Granulat eine Korn- oder Partikelgröße von zwischen 1 und 25 µm, bevorzugt von zwischen 7 und 15 µm, insbesondere von zwischen 8 und 12 µm aufweist.

Eine wie zuvor ausgeführte Vorrichtung 10, wobei die Nachkläreinheit 40 einen wenigstens eine Filtermembran aufweisenden Membranfilter aufweist.

Eine wie zuvor ausgeführte Vorrichtung 10, wobei die Filtermembran eine Siebweite von zwischen 2 und 35 µm, insbesondere von zwischen 3 und 25µm, bevorzugt von zwischen 5 und 15 µm aufweist.

Eine wie zuvor ausgeführte Vorrichtung 10, wobei die Nachkläreinheit 40 eine oder mehrere Schichten 50a, 50b, 50c, 50d, 50e, 50f aus auch unterschiedlichen Filtermaterialien bzw. Filtermaterialzusammensetzungen aufweist.

Eine wie zuvor ausgeführte Vorrichtung 10, wobei die Schichten 50a, 50b, 50c, 50d, 50e, 50f geeignet sind, verschiedene Umbauprodukte selektiv zurückzuhalten und/oder zu binden.

Eine wie zuvor ausgeführte Vorrichtung 10, wobei die Nachkläreinheit 40 und/oder der Filterkörper 44 einen im Wesentlichen säulen- oder kerzenförmigen Aufbau aufweist.

Eine wie zuvor ausgeführte Vorrichtung 10, wobei die Nachkläreinheit 40 und/oder der Filterkörper 44 einen Durchmesser von zwischen 20 und 50 cm, insbesondere von zwischen 25 und 45 cm, bevorzugt von zwischen 30 und 40 cm aufweist.

Eine wie zuvor ausgeführte Vorrichtung 10, wobei die Nachkläreinheit 40 eine Höhe von zwischen 90 und 250 cm, insbesondere von zwischen 100 und 200 cm, bevorzugt von 125cm, aufweist.

Eine wie zuvor ausgeführte Vorrichtung 10, wobei die Nachkläreinheit 40 ein, insbesondere unteres, erstes Ende und ein diesem im Wesentlichen gegenüberliegendes, insbesondere oberes, zweites Ende aufweist, wobei im Bereich des ersten Endes ein Einlass für das die Umbauprodukte enthaltende Abwasser und im Bereich des zweiten Endes ein Auslass für das gefilterte Abwasser vorgesehen ist.

Eine wie zuvor ausgeführte Vorrichtung 10, wobei die Nachkläreinheit 40 über- und/oder unterdruckbeaufschlagbar ist, insbesondere wobei das die Umbauprodukte enthaltende Abwasser über- und/oder unterdruckbeaufschlagt in die Nachkläreinheit 40 und/oder den Filterkörper 44 einbringbar ist.

Eine wie zuvor ausgeführte Vorrichtung 10, wobei die Nachkläreinheit 40 über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit 40 einbringbar ist.

Eine wie zuvor ausgeführte Vorrichtung 10, wobei der Nachkläreinheit 40 eine Rückspüleinheit zugeordnet ist, insbesondere wobei eine Rückspülung mit über- und/oder unterdruckbeaufschlagtem Wasser vorgesehen ist.

Eine wie zuvor ausgeführte Vorrichtung 10, wobei eine zyklische Rückspülung, insbesondere mit in der Nachkläreinheit 40 aufbereitetem Abwasser, vorgesehen ist.

Eine wie zuvor ausgeführte Vorrichtung 10, wobei die Belebungseinheit nach Art eines fluidisierten Festbettes ausgebildet ist.

Eine wie zuvor ausgeführte Vorrichtung 10, wobei in der Belebungseinheit Mikroorganismen oder Mischungen von Mikroorganismen, insbesondere Mikroorganismen ausgewählt aus der Gruppe bestehend aus mineralöl-, fett-, eiweiß-, schwermetall- und/oder reinigungsmittelab- oder umbauenden Mikroorganismen vorgesehen sind.

Eine wie zuvor ausgeführte Vorrichtung 10, wobei die Mikroorganismen auf in der Belebungsstufe vorgesehenen, insbesondere zirkulierenden Aufwuchskörpern 31 immobilisiert sind.

Eine Nachkläreinheit 40, insbesondere eine in einer wie zuvor beschriebenen Vorrichtung 10 vorgesehene Nachkläreinheit 40.

Eine wie zuvor beschriebene Nachkläreinheit 40 wobei ein ganz oder teilweise mit einem Granulat gefüllten Filterkörper 44 vorgesehen ist.

Eine wie zuvor beschriebene Nachkläreinheit 40, wobei das Granulat geeignet ist die Umbauprodukte ganz oder teilweise zu binden.

Eine wie zuvor beschriebene Nachkläreinheit 40, wobei das Granulat ausgewählt ist aus der Gruppe bestehend aus Kies, Sand, insbesondere Quarzsand, Zeolith, Zeolithabkömmlinge wie Klinoptilolith und Klinoptilolithabkömmlinge oder Mischungen daraus.

Eine wie zuvor beschriebene Nachkläreinheit 40, wobei das Granulat eine Korn- oder Partikelgröße von zwischen 1 und 25 µm, bevorzugt von zwischen 7 und 15 µm, insbesondere von zwischen 8 und 12 µm aufweist.

Eine wie zuvor beschriebene Nachkläreinheit 40, wobei einen wenigstens eine Filtermembran aufweisenden Membranfilter.

Eine wie zuvor beschriebene Nachkläreinheit 40, wobei die Filtermembran eine Siebweite von zwischen 2 und 35 µm, insbesondere von zwischen 3 und 25µm, bevorzugt von zwischen 5 und 15 µm aufweist.

Eine wie zuvor beschriebene Nachkläreinheit 40, wobei eine mehrschichtige Anordnungen von zwei oder mehr unterschiedlichen Filtermaterialien bzw. durch eine Zusammensetzungen unterschiedlicher Filtermaterialien.

Eine wie zuvor beschriebene Nachkläreinheit 40, wobei die Schichten 50a, 50b, 50c, 50d, 50e, 50f geeignet sind verschiedene Umbauprodukte selektiv zurückzuhalten und/oder zu binden.

Eine wie zuvor beschriebene Nachkläreinheit 40, wobei ein im Wesentlichen säulen- oder kerzenförmig ausgebildeter Filterkörper 44 vorgesehen ist.

Eine wie zuvor beschriebene Nachkläreinheit 40, wobei der Filterkörper 44 einen Durchmesser von zwischen 20 und 50 cm, insbesondere von zwischen 25 und 45 cm, bevorzugt von zwischen 30 und 40 cm aufweist.

Eine wie zuvor beschriebene Nachkläreinheit 40, wobei der Filterkörper 44 eine Höhe von zwischen 90 und 250 cm, insbesondere von zwischen 100 und 200 cm, bevorzugt von 125cm aufweist.

Eine wie zuvor beschriebene Nachkläreinheit 40, wobei der Filterkörper 44 in einem Gehäuse 43 angeordnet ist, insbesondere wobei das Gehäuse 43 eine dem, Filterkörper 44 entsprechende oder davon abweichende Ausformung aufweist.

Eine wie zuvor beschriebene Nachkläreinheit 40, wobei im Gehäuse 43 zwei oder mehr Filterkörper 44 anordenbar sind.

Eine wie zuvor beschriebene Nachkläreinheit 40, wobei zwei oder mehr in Reihe und/oder in Serie angeordnete Filterkörper 44 vorgesehen sind.

Eine wie zuvor beschriebene Nachkläreinheit 40, wobei die Nachkläreinheit 40 das Filtergehäuse 43 und/oder der Filterkörper 44 ein, insbesondere unteres, erstes Ende und ein diesem im Wesentlichen gegenüberliegendes, insbesondere oberes, zweites Ende aufweist, wobei im Bereich des ersten Endes ein Einlass für das die Umbauprodukte enthaltende Abwasser und im Bereich des zweiten Endes ein Auslass für das gefilterte Abwasser vorgesehen ist.

Eine wie zuvor beschriebene Nachkläreinheit 40, wobei die Nachkläreinheit 40 über- und/oder unterdruckbeaufschlagbar ist, insbesondere wobei das die Umbauprodukte enthaltende Abwasser über- und/oder unterdruckbeaufschlagt in die Nachkläreinheit 40 insbesondere den Filterkörper 44 einbringbar ist.

Eine wie zuvor beschriebene Nachkläreinheit 40, wobei die Nachkläreinheit 40 über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit insbesondere den Filterkörper 44 einbringbar ist.

Eine wie zuvor beschriebene Nachkläreinheit 40, wobei der Nachkläreinheit 40 eine Rückspüleinheit zugeordnet ist, insbesondere wobei eine Rückspülung mit über- und/oder unterdruckbeaufschlagtem Wasser vorgesehen ist.

Eine wie zuvor beschriebene Nachkläreinheit 40, wobei eine zyklische Rückspülung, insbesondere mit in der Nachkläreinheit 40 aufbereitetem Abwasser vorgesehen ist.

Ein Verfahren zum Aufbereiten von Abwasser, insbesondere mineralöl-, fett-, eiweiß- schwermetall- und/oder reinigungsmittelhaltigem Abwasser in einer wie zuvor beschriebenen Vorrichtung umfassend oder aufweisend die Schritten:
g) Absetzen von Feststoffen in einem Schlammfang,
h) Überführen des im Wesentlichen feststofffreien oder feststoffarmen Abwassers in eine Belebungseinheit,
i) Biologischer Umbau der im Abwasser gelösten Mineralöl-, Fett-, Eiweiß- Schwermetall- und/oder Reinigungsmittelrückstände,
j) Überführen des die Umbauprodukte enthaltenden Abwassers in eine Nachkläreinheit, insbesondere eine Nachkläreinheit gemäß einem der Ansprüche 21 bis 40
k) Abscheiden der Umbauprodukte in der Nachkläreinheit, und
L) Überführen des aufbereiteten Abwassers in eine nachgelagerte Verwendungsstufe.

Ein wie zuvor beschriebenes Verfahren, wobei eine Verdünnung des mineralöl-, fett-, eiweiß- schwermetall- und/oder reinigungsmittelhaltigen Abwassers mit Frischwasser und/oder aufbereitetem Abwasser vorgesehen ist.

Ein wie zuvor beschriebenes Verfahren, wobei der weitere Schritt:
h) Rückspülen der Nachkläreinheit mit Frischwasser und/oder aufbereitetem Abwasser vorgesehen ist.

Ein wie zuvor beschriebenes Verfahren, wobei Schritt g) mit über- und/oder unterdruckbeaufschlagtem Frischwasser und/oder aufbereitetem Abwasser durchgeführt wird.

Ein wie zuvor beschriebenes Verfahren, wobei eine Rückleitung des für die Rückspülung verwendeten Frischwasser oder aufbereitetem Abwasser in den Schlammfang oder die Belebungseinheit erfolgt.

Die jetzt mit der Anmeldung und später eingereichten Ansprüche sind ohne Präjudiz für die Erzielung weitergehenden Schutzes. Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mitoffenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zur Aufbereitung von Abwasser, insbesondere mineralöl-, fett-, eiweiß-, schwermetall-, salz- und/oder reinigungsmittelhaltigem Abwasser, aufweisend:
- wenigstens eine Belebungseinheit zum biologischen Umbau von im Abwasser gelösten Stoffen, insbesondere Mineralöl, Fett, Eiweiß, Schwermetalle, Salze und/oder Reinigungsmittel oder Rückständen der vorgenannten,
wobei
wenigstens eine von der Belebungseinheit getrennte Nachkläreinheit (40) für das die Umbauprodukte enthaltende Abwasser vorgesehen ist, und die Nachkläreinheit (40) als ganz oder teilweise mit einem Granulat gefüllter Filter oder Filterkörper (44) ausgebildet ist.

2. Vorrichtung nach Anspruch 1, **dadurch gekennzeichnet, dass** das Granulat geeignet ist, die Umbauprodukte ganz oder teilweise zu binden.

3. Vorrichtung nach einem der vorhergehenden Ansprüche, **dadurch gekennzeichnet, dass** das Granulat ausgewählt ist, aus der Gruppe bestehend aus Kies, Sand, insbesondere Quarzsand, gebrochen gebranntem Ton oder Keramik, Zeolith, Zeolithabkömmlinge, Klinoptilolith, Klinoptilolithabkömmlinge oder Mischungen daraus.

4. Vorrichtung nach einem der vorhergehenden Ansprüche, **dadurch gekennzeichnet, dass** das Granulat eine Korn- oder Partikelgröße von zwischen 0,4 und 3,0 mm, bevorzugt von zwischen 0,5 und 2,0 mm, insbesondere von zwischen 0,6 und 1,4 mm aufweist und/oder das Granulat eine Schüttdichte von 600-1200 kg/m³, bevorzugt 700-1000 kg/m³, insbesondere bevorzugt ca. 800 kg/m³ +/-10 % aufweist und/oder das Granulat fein- oder hochporig ausgebildet ist.

5. Vorrichtung nach einem der vorhergehenden Ansprüche, **dadurch gekennzeichnet, dass** die Nachkläreinheit (40) einen wenigstens eine Filtermembran aufweisenden Membranfilter (51) aufweist und/oder die Nachkläreinheit (40) ein, insbesondere unteres, erstes Ende und ein diesem im Wesentlichen gegenüberliegendes, insbesondere oberes, zweites Ende aufweist, wobei im Bereich des ersten Endes ein Einlass für das die Umbauprodukte enthaltende Abwasser und im Bereich des zweiten Endes ein Auslass für das gefilterte Abwasser vorgesehen ist.

6. Vorrichtung nach einem der vorhergehenden Ansprüche, **dadurch gekennzeichnet, dass** die Nachkläreinheit (40) eine oder mehrere Schichten (50a, 50b, 50c, 50d, 50e, 50f) aus auch unterschiedlichen Filtermaterialien bzw. Filtermaterialzusammensetzungen aufweist, wobei insbesondere die Schichten (50a, 50b, 50c, 50d, 50e, 50f) geeignet sind, verschiedene Umbauprodukte selektiv zurückzuhalten und/oder zu binden.

7. Vorrichtung nach einem der vorhergehenden Ansprüche, **dadurch gekennzeichnet, dass** die Nachkläreinheit (40) über- und/oder unterdruckbeaufschlagbar ist, insbesondere wobei das die Umbauprodukte enthaltende Abwasser über- und/oder unterdruckbeaufschlagt in die Nachkläreinheit (40) und/oder den Filterkörper (44) einbringbar ist.

8. Vorrichtung nach einem der vorhergehenden Ansprüche, **dadurch gekennzeichnet, dass** die Nachkläreinheit (40) über- und/oder unterdruckbeaufschlagbar ist, insbesondere wobei das die Umbauprodukte enthaltende Abwasser vom ersten Ende her über- und/oder unterdruckbeaufschlagt in die Nachkläreinheit (40) einbringbar ist und/oder der Nachkläreinheit (40) eine Rückspüleinheit zugeordnet ist, insbesondere wobei eine Rückspülung mit über- und/oder unterdruckbeaufschlagtem Wasser vorgesehen ist.

9. Vorrichtung nach einem der vorhergehenden Ansprüche, **dadurch gekennzeichnet, dass** die Belebungseinheit nach Art eines fluidisierten Festbettes ausgebildet ist und/oder in der Belebungseinheit Mikroorganismen oder Mischungen von Mikroorganismen, insbesondere Mikroorganismen ausgewählt aus der Gruppe bestehend aus mineralöl-, fett-, eiweiß-, schwermetall- und/oder reinigungsmittelab- oder umbauenden Mikroorganismen vorgesehen sind.

10. Vorrichtung nach einem der vorhergehenden Ansprüche, **dadurch gekennzeichnet, dass** die Mikroorganismen auf in der Belebungseinheit vorgesehenen, insbesondere zirkulierenden Aufwuchskörpern (31) immobilisiert sind.

11. Vorrichtung nach einem der vorhergehenden Ansprüche, **dadurch gekennzeichnet, dass** der Belebungseinheit (30) ein Schlammfang (20) vorgeschaltet ist.

12. Nachkläreinheit, insbesondere in einer Vorrichtung (10) gemäß einem der vorhergehenden Ansprüche vorgesehene Nachkläreinheit (40), **gekennzeichnet durch** einen ganz oder teilweise mit einem Granulat gefüllten Filterkörper (44).

13. Nachkläreinheit nach Anspruch 12, **dadurch gekennzeichnet, dass** das Granulat geeignet ist die Umbauprodukte ganz oder teilweise zu binden und/oder zwei oder mehr in Reihe und/oder in Serie angeordnete Filterkörper (44).

14. Verwendung einer Nachkläreinheit, insbesondere nach einem der Ansprüche 12 bis 13, bestehend aus einem ganz oder teilweise mit einem Granulat gefüllten Filter oder Filterkörper in einer Vorrichtung zur Aufbereitung von Abwasser, nach einem der vorhergehenden Ansprüche 1 bis 11, wobei die Nachkläreinheit in Fließrichtung des Abwassers der Belebungseinheit nachgeschaltet ist.

15. Verwendung nach Anspruch 14, **dadurch gekennzeichnet, dass** die Nachkläreinheit (40) über- und/oder unterdruckbeaufschlagbar ist, insbesondere wobei das die Umbauprodukte enthaltende Abwasser über- und/oder unterdruckbeaufschlagt in die Nachkläreinheit (40) insbesondere den Filterkörper (44) einbringbar ist.
